# EUROPÄISCHE PATENTANMELDUNG

(11) **EP 2 345 507 A2**
(43) Veröffentlichungstag der Anmeldung: **20.07.2011**
(21) Anmeldenummer: 11000191.4
(22) Anmeldetag: 12.01.2011
(51) Int. Cl.: B25B 5/00, B25B 5/08, B25B 5/16

(54) **Vorrichtung zum Klemmen von Werkstücken auf einer Basis**

(30) Priorität: 14.01.2010 DE 102010004739
(71) Anmelder: Prüß, Ludwig, 38104 Braunschweig (DE)
(72) Erfinder: Prüß, Ludwig, 38104 Braunschweig (DE)
(74) Vertreter: Stornebel, Kai

(57) **Zusammenfassung**

Die Erfindung betrifft eine Vorrichtung zum Klemmen von Werkstücken auf einer Basis, mit einem der Basis zugeordneten, senkrecht zu der Basis orientierten, langgestreckten Träger (1) und einem Ausleger (2), der im Wesentlichen senkrecht zu der Längserstreckung des Trägers (1) ausgerichtet ist, der Ausleger (2) ist verschieblich in einem Klemmblock (3) gelagert, der verschieblich an dem Träger (1) gelagert ist, so dass der Ausleger (2) und der Träger (1) jeweils unabhängig voneinander, relativ zueinander verschiebbar gelagert sind, an einem Ende des Auslegers (2) ist ein Klemmhebel (5) angeordnet, dem eine Verlagerungseinrichtung (4) zugeordnet ist, so dass das dem Träger (1) abgewandte, distale Ende des Klemmhebels (5) relativ zu dem Ausleger (2) verlagerbar ist wobei, an dem distalen Ende des Klemmhebels (5) ein abnehmbarer Aufsatz (20) mit zumindest einer in Richtung auf die Basis orientierten Profilausnehmung (21, 22) angeordnet ist.

## Beschreibung

Die Erfindung betrifft eine Vorrichtung zum Klemmen von Werkstücken auf einer Basis, mit einem der Basis zugeordneten, senkrecht zu der Basis orientierten, langgestreckten Träger und einem Ausleger, der im Wesentlichen senkrecht zu der Längserstreckung des Trägers ausgerichtet ist. Der Träger ist verschieblich in einem Klemmblock gelagert, der wiederum verschieblich an dem Träger gelagert ist, so dass der Ausleger und der Träger jeweils unabhängig voneinander relativ zueinander verschiebbar gelagert sind. An einem Ende des Auslegers ist ein Klemmhebel angeordnet, dem eine Verlagerungseinrichtung zugeordnet ist, so dass das dem Träger abgewandte, distale Ende des Klemmhebels relativ zu dem Ausleger verlagerbar ist. Eine solche Vorrichtung ist insbesondere zum Klemmen und Festlegen von Werkstücken auf einer Werkbank geeignet. An der Werkbank wird die Vorrichtung befestigt, so dass die Werkbank die Basis bildet. Ebenfalls kann es vorgesehen sein, dass die Basis permanent mit dem Träger verbunden ist, so dass eine permanente Verbindung mit der Basis gewährleistet ist.

Aus der EP 1 479 481 A1 ist eine tragbare Werkbank mit einem sehr stabilen und widerstandsfähigen Trägeraufbau, einer Arbeitsplatte und Stützfüßen bekannt. An der Arbeitsplatte ist ein vertikal angeordneter Träger befestigt. An dem vertikalen Träger ist ein Gleitblock verschiebbar geführt. In dem Gleitblock ist eine Aufnahmebohrung für den vertikalen Träger angeordnet. Beiderseits der Aufnahmebohrung sind zwei Führungsbohrungen für im Wesentlichen horizontal angeordnete Stangen ausgebildet, um eine Höhenverstellung sowie eine Verstellung in Vertikalrichtung zu gewährleisten. Die beiden Stangen sind über ein Verbindungselement miteinander gekoppelt, in dem ein Schlitz angeordnet ist, der einen Teil einer winkelig gebogenen Lasche aufnimmt. Die Lasche ist in einem geringen Schwenkbereich um einen Bolzen drehbar gelagert und kann mit einem Exzenter nach unten in Richtung auf die Arbeitsplatte gedrückt werden.

Mit einer solchen Vorrichtung ist es schwierig, runde Gegenstände zu klemmen.

Aufgabe der vorliegenden Erfindung ist es, eine Vorrichtung bereitzustellen, mit der eine sicherere Festlegung unterschiedlichster Werkstücke an der Basis erfolgen kann.

Erfindungsgemäß wird diese Aufgabe durch eine Vorrichtung mit den Merkmalen des Hauptanspruches gelöst. Vorteilhafte Ausgestaltungen und Weiterbildungen der Erfindung sind in den Unteransprüchen sowie in der Beschreibung aufgeführt.

Die Vorrichtung zum Klemmen von Werkstücken auf einer Basis, mit einem der Basis zugeordneten, senkrecht zu der Basis orientierten, lang gestreckten Träger und einem Ausleger, der im Wesentlichen senkrecht zu der Längserstreckung des Trägers ausgerichtet ist, wobei der Ausleger verschieblich in einem Klemmblock gelagert ist, der wiederum verschieblich an dem Träger gelagert ist, so dass der Ausleger und der Träger jeweils unabhängig voneinander, relativ zueinander verschiebbar gelagert sind, wobei an einem Ende des Auslegers ein Klemmhebel angeordnet ist, dem eine Verlagerungseinrichtung zugeordnet ist, so dass das dem Träger abgewandte, distale Ende des Klemmhebels relativ zu dem Ausleger verlagerbar ist, sieht vor, dass an dem distalen Ende des Klemmhebels ein abnehmbarer Aufsatz mit zumindest einer in Richtung auf die Basis orientierten Profilausnehmung, insbesondere Profilkerbe angeordnet ist. Durch den abnehmbaren Aufsatz ist es möglich, nach Art eines Adapters eine Kontaktfläche bereitzustellen, die auf das jeweilige Werkstück abgestimmt ist. Der Aufsatz kann leicht an dem Ende des Klemmhebels befestigt werden, beispielsweise aufgesteckt werden, so dass eine schnelle und einfache Anpassung der Aufsätze an die jeweiligen Werkstückgeometrien erfolgen kann. Durch die in Richtung auf die Basis orientierte Profilausnehmung oder -kerbe wird verhindert, dass das Werkstück wegrollt, wenn noch keine vollständige Klemmung vorhanden ist. Die zumindest eine Profilausnehmung, es können auch mehrere Profilausnehmungen oder -kerben sein, bewirkt cinen gewissen Formschluss, so dass bereits bei einem leichten Kontakt des Aufsatzes bzw. des Klemmhebels mit dem auf der Basis angeordneten Werkstück eine zumindest vorläufige Sicherung möglich ist. Es ist daher möglich, das Werkstück alleine durch das Aufsetzen des Aufsatzes auf das Werkstück zu fixieren, so dass eine Fixierung bei einer einarmigen Betätigung sicher erfolgen kann. Es ist nicht mehr notwendig, dass das Werkstück mit einer Hand gehalten und der Klemmhebel präzise auf dem Scheitelpunkt fixiert werden muss.

Die Profilausnehmung oder die Profilausnehmungen können unterschiedliche Formen aufweisen, neben winklig zueinander angeordneten Flächen der Kerbe, beispielsweise rechtwinklige Kerben, können runde, abgerundete oder kalottenförmige Kerben oder Ausnehmungen in dem Aufsatz angeordnet sein, so dass nicht nur runde, sondern auch kugelförmige Gegenstände sicher gehalten werden können.

Der Träger kann um seine senkrechte Achse schwenkbar gelagert sein, beispielsweise über ein Drehlager, das an dem Fuß des Trägers angebracht ist. Das Drehlager kann auch an einer anderen Stelle an oder in dem Träger angeordnet sein. Durch die Drehbarkeit können Gegenstände an verschiedenen Orten auf der Basis oder einem Auflager fixiert werden, ohne dass diese exakt zu dem Träger oder dem Aufsatz ausgerichtet werden müssen. Die Drehbarkeit kann durch eine Feststelleinrichtung blockiert werden, beispielsweise durch eine Klemme oder ein Formschlusselement.

Sieht der Träger einen Fuß vor, der beispielsweise an einer Arbeitsplatte fixiert wird, ist das System mit dem Aufsatz parallel zur Basis, hier den Fuß oder die Arbeitsplatte, verschiebbar.

Der Aufsatz ist bevorzugt drehbar an dem Klemmhebel befestigt, so dass eine leichte Orientierung der Profilausnehmung relativ zu dem Werkstück und relativ zu dem Klemmhebel erfolgen kann. Darüber hinaus kann vorgesehen sein, dass der Aufsatz fixierbar bzw. arretierbar an dem Klemmhebel befestigt ist, beispielsweise über Nuten, um eine verbesserte Fixierung des zu klemmenden Werkstückes zu erreichen.

Der Klemmhebel kann schwenkbar an dem Ausleger gelagert sein, wobei an dem Klemmhebel eine gabelförmige Aufnahme für den Ausleger ausgebildet sein kann, so dass der Ausleger beiderseits von dem Klemmhebel eingefasst ist. Durch die gabelförmige Ausnehmung verläuft die Schwenkachse des Klemmhebels, wobei die gabelförmige Ausgestaltung gleichzeitig eine Begrenzung des Verschwenkwinkels realisiert, da bei einer entsprechenden Anordnung der Drehachse der im Wesentlichen waagerecht, also parallel zu dem Ausleger, angeordnete Klemmhebel nur einen geringen Verschwenkweg zurücklegen kann. Der Klemmhebel schlägt dann an den Ausleger an, so dass eine mechanische Blockierung der Schwenkbewegung erfolgt.

Der Ausleger und/oder der Träger können schienenartig ausgebildet sein und weisen insbesondere einen rechteckigen Querschnitt oder einen Querschnitt in Gestalt eines Doppel-T-Trägers auf. Dadurch wird eine belastungsgerechte, materialausnutzende Konstruktion bereitgestellt, da die Träger und Ausleger überwiegend auf Biegung belastet werden und die Träger und Ausleger so ausgebildet sind, dass sie hohe Biegekräfte aufnehmen können. Der Ausleger wird bei einer horizontalen Ausrichtung eine senkrechte Orientierung der längeren Achse aufweisen, die längere Achse des Querschnittes des Trägerprofils wird im Wesentlichen parallel zu der Längserstreckung des Auslegers verlaufen.

Der Klemmhebel kann in Richtung auf die Basis federbelastet an dem Ausleger oder einem Anbauteil des Auslegers angeordnet sein, so dass bereits nach dem ersten Kontakt des Aufsatzes durch die Federkraft eine Verkantung des Klemmblocks an dem Träger erfolgt, so dass eine erste Festlegung des Werkstückes erfolgen kann. Darüber hinaus werden Klappergeräusche durch die Federbelastung vermieden.

Der Klemmblock kann in Richtung auf die Basis und/oder von der Basis weg federbelastet ausgebildet sein. Die Ausgestaltung einer Vorspannung von der Basis weg erleichtert eine Feststellung des Klemmblocks, so dass eine Höhe bzw. der Abstand des Aufsatzes zu der Basis leicht eingestellt werden kann. Darüber hinaus wird vermieden, dass der Ausleger zusammen mit dem Klemmhebel bei einer vertikalen Ausrichtung des Trägers nach unten fällt. Eine Federbelastung in Richtung auf die Basis bewirkt eine automatische Klemmung, ohne dass eine Betätigung der Verlagerungseinrichtung erfolgen müsste. Die Federbelastung erfolgt vorteilhafterweise über eine Druckfeder, die von dem der Basis abgewandten Ende des Trägers auf den Klemmblock wirkt, bei einer vertikalen Orientierung des Trägers also von oben auf den Klemmblock drückt. Der Klemmmechanismus kann dann alleine und durch die Federkraft wirksam eingespannt werden. Sind zwei gegenläufig auf den Klemmblock wirkende Federn an dem Träger angeordnet, stellt sich eine Ruhelage bei einem Kräftegleichgewicht ein, so dass der Klemmblock und damit auch der Ausleger in einem festlegbaren Abstand zu der Basis gehalten werden.

Die Verlagerungseinrichtung kann als ein Exzenter ausgebildet sein, insbesondere als ein Exzenter, der ausgehend von einer Mittelstellung in unterschiedlichen Drehrichtungen unterschiedliche Exzentrizitäten aufweist. Über einen Exzenter können je nach Steigung hohe Kräfte auf den Klemmhebel ausgeübt werden. Da der Klemmhebel zum Klemmen des Werkstückes bereits an dem Werkstück anliegt, bevor der Exzenter betätigt wird, sind nur relativ geringe Verstellwege für den Klemmhebel notwendig, um eine außerordentlich feste Klemmung zu bewirken. Je nach Drehrichtung des Exzenters können unterschiedlich große Feststellwege bereitgestellt werden, wobei je Drehrichtung unterschiedlich große Kräfte aufgebracht werden müssen, um eine entsprechende Klemmung zu bewirken. Durch die unterschiedlichen Exzentrizitäten ist es darüber hinaus möglich, die Klemmkraft wie gewünscht einzustellen.

An dem Exzenter kann ein starrer Hebel zum Bedienen des Exzenters angeordnet sein, wodurch es möglich ist, dass über diesen starren Hebel und den Exzenter, der an dem Ausleger oder einem Anbauteil an dem Ausleger befestigt ist und dadurch eine mechanische Kopplung mit dem Ausleger aufweist, ein Moment auf den Klemmblock aufgebracht wird, so dass die Winkelstellung des Klemmblockes relativ zu dem Träger aufgehoben werden kann, so dass eine gleitende Verschiebung, insbesondere ein Verschieben in Richtung auf das Werkstück über den Hebel eingeleitet werden kann. Dadurch wird die einhändige Betätigung der Vorrichtung erleichtert.

Nachfolgend wird ein Ausführungsbeispiel der Erfindung anhand der beigefügten Figuren näher erläutert. Gleiche Bezugszeichen bezeichnen gleiche Bauteile. Es zeigen:
- Figur 1: - eine Vorrichtung in einer perspektivischen Darstellung;
- Figur 2: - die Vorrichtung in einer Seitenansicht;
- Figur 3: - eine Frontalansicht der Vorrichtung;
- Figur 4: - eine Draufsicht auf die Vorrichtung;
- Figur 5: - eine Schnittdarstellung entlang A-A gemäß Figur 2;
- Figur 6: - eine Variante der Vorrichtung; sowie
- Figur 7 bis 9: - Detaildarstellungen eines Aufsatzes.

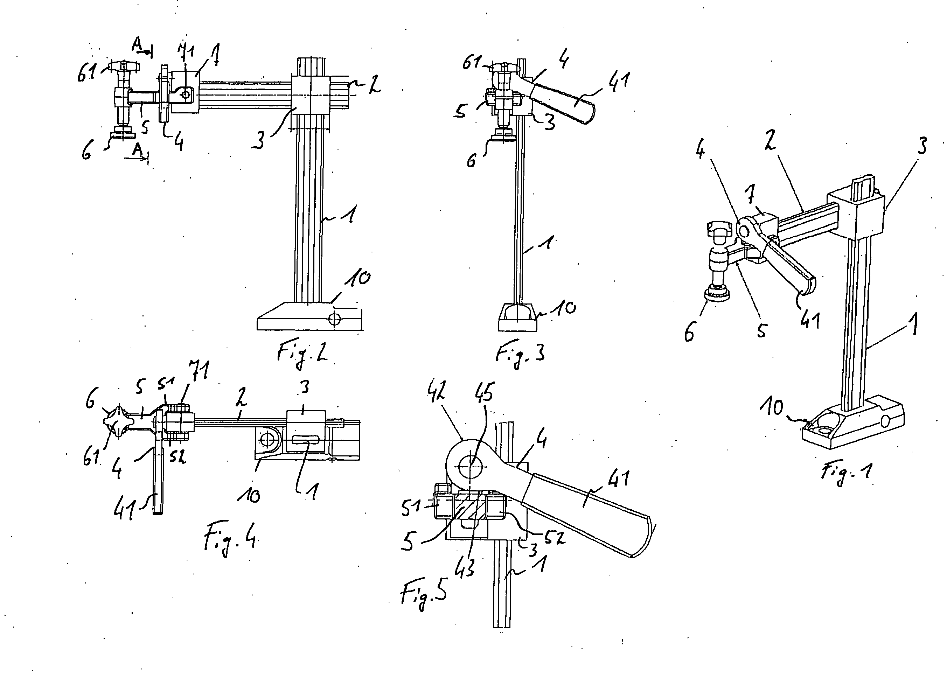

In der Fig. 1 ist in einer perspektivischen Darstellung eine Klemmvorrichtung mit einem vertikalen Träger 1 gezeigt, an dessen unterem Ende ein Fuß 10 angeordnet ist. An diesem Fuß 10 kann eine Basis, beispielsweise eine Werkplatte angeordnet sein. Alternative Festlegungen des Trägers 1 an der Basis, die nicht dargestellt ist, sind möglich. Beispielsweise kann der Träger 1 in eine korrespondierende Ausnehmung der Basis eingesteckt werden, ein Verschrauben oder eine Klemmverbindung sind ebenso möglich wie eine Steckverbindung und Arretierung durch Bolzen oder dergleichen. Der Fuß 10 kann als Basis ausgebildet sein. Neben der vertikalen Ausrichtung des Trägers 1 kann dieser in jeder beliebigen Orientierung ausgerichtet sein, in der Regel ist der Träger 1 senkrecht zu der Basis, die eine in der Regel ebene Fläche ausbildet, orientiert.

An dem Träger 1, der einen im Wesentlichen rechteckigen Querschnitt aufweist, ist in einem Schlitz ein Klemmblock 3 verschieblich gelagert. Der Klemmblock 3 ist als Würfel ausgebildet und weist eine korrespondierend zu dem Querschnitt des Trägers 1 ausgebildete Ausnehmung auf. Neben dieser ersten Ausnehmung ist eine zweite, senkrecht dazu orientierte Ausnehmung für einen Ausleger 2 vorgesehen, der ebenfalls verschieblich in dieser Ausnehmung gelagert ist. Durch diese doppelte Verschieblichkeit ist es möglich, den Klemmblock 3 entlang des Trägers 1 zu verschieben, gleichzeitig kann der Ausleger 2 relativ zu dem Träger 1 in den Klemmblock 3 verschoben werden. Eine Fixierung des Klemmblockes erfolgt in der Regel durch eine Verkippung, so dass eine Klemmung aufgrund der Gewichtskraft oder einer Klemmkraft und das durch die Klemmkraft ausgeübte Moment erfolgt. Zusätzliche Fixierungen über Stifte oder Klemmschrauben sind möglich, in der Regel jedoch nicht notwendig.

Der Fig. 1 ist weiterhin zu entnehmen, dass der Ausleger 2 neben dem Träger 1 angeordnet ist. Es ist lediglich ein einziger Ausleger 2 vorgesehen, grundsätzlich ist es auch möglich, zwei parallel zueinander angeordnete Ausleger vorzusehen, wobei der Träger zwischen den beiden Auslegern angeordnet ist. Bei der gewählten Ausgestaltung der Querschnittsformen für den Träger 1 und den Ausleger 2 ist dies jedoch nicht notwendig, dadurch die Hochkantausrichtung des Auslegers 2 und die parallele Ausrichtung der Langseite des im Wesentlichen rechteckigen Querschnitts des Trägers 1 zu der Längserstreckung des Auslegers 2 ist eine ausgezeichnete Stabilität und Biegesteifigkeit der Konstruktion erreicht wird.

An dem dem Träger 1 abgewandten Ende des Auslegers 2 ist ein Lagerblock 7 angeordnet, an dem ein Klemmhebel 5 schwenkbar gelagert ist. An dem Lagerblock 7 ist ebenfalls ein Exzenter 4, der einen starren Hebel 41 aufweist, drehbar gelagert. Über den Exzenter 4 findet eine Relativverlagerung des Klemmhebels 5 zu dem Ausleger 2 im Rahmen der möglichen Verschwenkbarkeit statt. An dem distalen Ende des Klemmhebels 5, also demjenigen Ende, das dem Lagerblock 7 abgewandt ist, ist eine Aufnahme 6 für den nicht dargestellten Aufsatz angeordnet. Die Aufnahme 6 kann einen runden Querschnitt aufweisen, so dass die Aufnahme drehbar an ihr festgelegt werden kann. Die Aufnahme 6 selbst kann relativ zu dem Lagerblock 7 drehbar angeordnet sein, so dass eine Drehung der gesamten Aufnahme 6 erfolgen kann.

In der Fig. 2 ist die Vorrichtung in einer Seitenansicht dargestellt. Es ist die orthogonale Ausrichtung der Profilschienen des Trägers 1 und des Auslegers 2 zu erkennen. An dem distalen Ende des Auslegers 2 ist der Lagerblock 7 mit dem um eine Schwenkachse 71 schwenkbar gelagerten Klemmhebel 5 gezeigt. Der Exzenter 4 ist drehbar um eine Achse parallel zur Längserstreckung des Auslegers 2 an dem Lagerblock 7 gelagert. An dem distalen Ende des Klemmhebels 5 ist die Aufnahme 6 fest angeordnet. Der Aufnahme 6 ist eine Verstelleinrichtung 61 zugeordnet, über die eine Höheneinstellung sowie eine Verdrehung der Aufnahme 6 stattfinden kann.

In der Fig. 3 ist in der Frontalansicht die Vorrichtung dargestellt. Es ist zu erkennen, dass die vertikale Achse der Aufnahme 6 versetzt neben der Längsachse des Trägers 1 verläuft. Das Handrad 61 als Verstelleinrichtung liegt vor dem Hebel 41. Die Aufnahme 6 und/oder der in der Figur 3 nicht dargestellte Aufsatz können um eine Achse parallel zu der Längserstreckung des Klemmhebels 5 verdrehbar gelagert sein, so dass nicht nur eine Seite des Aufsatzes zu der Basis oder Arbeitsfläche orientiert werden kann, sondern mehrere Seiten, beispielsweise vier Seiten bei einem würfelartigen Aufsatz.

Die Fig. 4 zeigt eine Draufsicht auf die Vorrichtung. In dieser Draufsicht kann der im Wesentlichen rechteckige Querschnitt des Trägers 1 erkannt werden, ebenso die seitliche Vorbeiführung des Auslegers 2 durch den Klemmblock 3 neben dem Träger 1.

In der Draufsicht gemäß Fig. 4 ist zu erkennen, dass der Klemmhebel 2 eine gabelartige Struktur im Bereich des Lagerblocks 7 aufweist. Die beiden Schenkel 51, 52 liegen seitlich an dem Lagerblock 7 an und dienen als Aufnahme für einen Lagerbolzen, damit eine Verschwenkung des Klemmhebels 5 um die Schwenkachse 71 erfolgen kann. Ebenfalls sind in der Figur 4 der Exzenter 4 mit dem Hebel 41 sowie die Aufnahme 6 mit der Verstelleinrichtung 61 in Gestalt eines Drehrades gezeigt.

Fig. 5 stellt einen Schnitt gemäß A-A gemäß Fig. 2 dar. Die beiden Gabelschenkel 51, 52 sind ebenso zu erkennen wie der massive, rechteckige Querschnitt des Klemmhebels 5.

Die Schwenkachse 45 des Exzenters 4 liegt parallel zu der Längserstreckung des Auslegers 2. Der Exzenter 4 weist unterschiedliche Exzentrizitäten 42, 43 auf, so dass je nach Drehrichtung des Hebels 41 eine unterschiedlich große Verlagerung des Klemmhebels 5 nach unten erfolgt, so dass das Werkstück, das zwischen dem Aufsatz und der Basis zu klemmen ist, unterschiedlich weit in Richtung auf das Werkstück gedrückt wird.

Wird der Hebel in der Ausführungsform gemäß Fig. 5 nach rechts verschwenkt, erfolgt ein kleinerer Verstellweg als bei einer Verschwenkung nach links, da die Exzentrizität 42 in der linken Verschwenkrichtung größer ist als in der rechten Verschwenkrichtung.

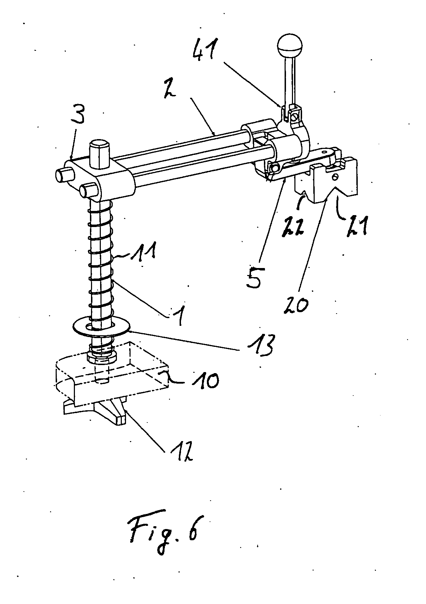

In der Figur 6 ist eine Variante der Vorrichtung gezeigt. Der Träger 1 ist dabei als ein Rundprofil ausgebildet, mit einem drehbar daran gelagerten Klemmblock 3, der Bohrungen aufweist, in denen zwei Ausleger 2 beidseitig neben dem Träger 1 verschieblich gelagert sind. Die Ausleger 2 sind beiderseits neben dem Träger 1 angeordnet. Um den Träger 1 ist eine Wendelfeder 11 in Gestalt einer Druckfeder angeordnet. Ein Drehrad 12 ist an dem unteren Ende des Trägers 1 vorgesehen, um den Träger 1 an einer Werkplatte 10 oder dergleichen zu fixieren. Eine Abstützplatte 13 ist ebenfalls vorgesehen, um einen Höhenanschlag für den Träger 3 bei nicht vorhandener Druckfeder 11 bereitzustellen. Die Feder 11 kann auch an einem Träger 1 mit einem rechteckigen Querschnitt gemäß dem Ausführungsbeispiel der Figuren 1 bis 4 angeordnet sein, ebenfalls kann eine weitere Feder oberhalb des Klemmblockes 3 angeordnet sein, die sich an einem nicht dargestellten Widerlager, das zur Federkraftaufnahme ausgebildet ist, abstützt. Eins solche zweite Feder ist für beide Ausführungsformen vorgesehen. Statt einer Befestigung des Trägers 1 in der Werkbank über ein Drehrad 12 und eine Verschraubung kann die Festlegung auch über Knebel erfolgen. Eine Mutter kann an dem Träger 1 angeordnet sein, die die Knebel auseinander spreizen oder andere Spreizelemente aktiviert, so dass das untere Ende des Trägers sicher an der Werkplatte gehalten wird. Das untere Ende des Trägers 1 kann also in eine Ausnehmung der Werkplatte eingeführt und über Spreizelement, die an oder in dem Träger 1 angeordnet sind, daran festgelegt werden. Ein Höhenanschlag, damit der Träger 1 nicht zu tief eingeführt wird, ist an dem Träger 1 vorgesehen. Die Klemmung kann in der Öffnung der Werkbank oder unterhalb erfolgen.

Der Hebel 41 ist klappbar ausgestaltet, der Klemmhebel 5 weist in Abweichung zu der Figur 1 keine gabelartige Ausgestaltungen auf.

An dem distalen Ende des Klemmhebels 5, also an demjenigen Ende des Klemmhebels 5, das dem Träger 1 abgewandt ist, ist an der nicht dargestellten Aufnahme 6 ein Aufsatz 20 angeordnet, der nach unten gerichtete Profilausnehmungen 21, 22 aufweist. In den Profilausnehmungen 21, 22 können Werkstücke aufgenommen werden, so dass eine formschlüssige Festlegung auch ohne Klemmwirkung bereitgestellt werden kann.

Eine Variante der Adaptergestaltung sieht vor, dass der Aufsatz 20 um eine im Wesentlichen horizontale Achse, bevorzugt in Längsrichtung des Klemmhebels 5 verlaufend, gelagert ist. Der Aufsatz 20 kann dann bei einer beispielsweise würfelartigen Gestalt um die horizontale Achse gedreht werden, so dass insgesamt vier Seitenflächen mit Profilausnehmungen zur Verfügung stehen, um unterschiedliche Profilausnehmungen 21, 22 bereit zu stellen. Es ist ebenfalls möglich und vorgesehen, dass die jeweiligen Seitenflächen unterschiedliche Härten aufweisen und ggf. aus unterschiedlichen Materialien bestehen. Dadurch ist es möglich, dass eine verbesserte Anpassung an das zu klemmende Werkstück erfolgen kann. Bei polygonalen Ausgestaltungen können auch mehr als vier Seiten vorhanden sein. Bevorzugt kann der Aufsatz in jeder Stellung fixiert werden, damit eine sichere Klemmung gewährleistet ist. Die drehbare Ausgestaltung des Aufsatzes um eine horizontale Achse kann auch bei einem Aufbau gemäß der Figuren 1 bis 5 erfolgen.

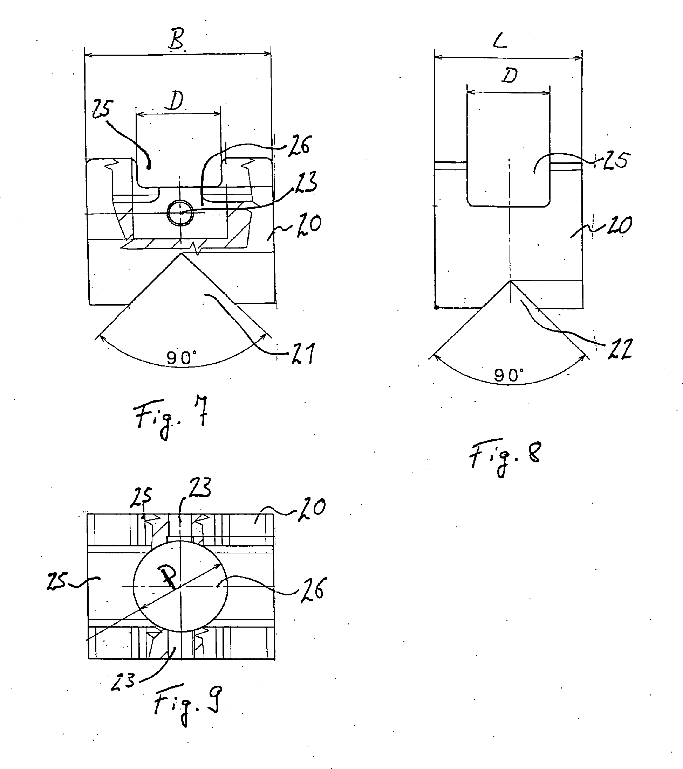

In den Figuren 7 bis 9 sind die Teildarstellungen des Aufsatzes 20 gezeigt. Figur 7 zeigt eine Seitenansicht des Aufsatzes 20 mit einer ersten Profilausnehmung 21, die auf der Unterseite des Aufsatzes 20 ausgebildet ist, also auf derjenigen Seite, die der Aufnahme 6 des Klemmhebels 5 abgewandt ist. Auf der der Profilausnehmung 21 gegenüberliegenden Seite ist eine Bohrung 26 vorgesehen, die einen Durchmesser D aufweist, der im Wesentlichen dem Durchmesser der runden Aufnahme 6 aufweist. Die Aufnahme 6 kann in die Bohrung 26 eingeführt werden. Ebenfalls ist ein Gewinde 23 vorgesehen, durch das ein Fixierstift, beispielsweise eine Schraube, in Richtung auf die nicht dargestellte, eingeführte Aufnahme 6 verlagert werden kann. Dadurch kann der Aufsatz 20 sicher an der Aufnahme 6 festgelegt werden. Die Profilausnehmung 21 ist als ein rechtswinkliger Ausschnitt ausgebildet, der durchgehend angeordnet ist, also senkrecht zu der Zeichenebene verläuft. An der Oberseite des Aufsatzes 20 ist eine durchlaufende Nut 25 mit einer Breite D gezeigt, die im Wesentlichen der Breite des Klemmhebels 5 entspricht, so dass eine Fixierung durch das Einlegen des Klemmhebels 5 in die Nut 25 möglich ist.

In der Figur 8 ist eine um 90° gedrehte Darstellung des Aufsatzes 20 im Vergleich zu Figur 7 gezeigt. Auch hier ist eine Profilausnehmung 22, an der Unterseite in Gestalt einer rechtwinkligen Ausnehmung ausgebildet. Eine parallel zu der Profilausnehmung 22 und der Oberseite verlaufende Nut 25 dient wiederum als Aufnahme für den Klemmhebel 5. die Darstellungen in den Figuren 7 und 8 zeigen, dass der Aufsatz 20 eine rechteckige Kontur aufweist, wobei die Breite B geringer als die Länge L ist.

In der Figur 9 ist eine Draufsicht auf den Aufsatz 20 gezeigt, die Bohrung 26 für die Aufnahme 6 mit dem Durchmesser P ist ebenso gezeigt wie die Nuten 25, die rechtwinklig verlaufen und die Gewindebohrung 23, wobei mehrere Gewindebohrungen 23 vorgesehen sind, um die Aufnahme 6 in der Bohrung 26 zu fixieren.

Sofern keine Nuten 25 vorgesehen sind, ist die Aufnahme 6 innerhalb der Bohrung 26 drehbar gelagert, so dass eine freie Ausrichtung des Aufsatzes 20 und damit auch der Profilausnehmungen 22 möglich ist.

## Patentansprüche

1. Vorrichtung zum Klemmen von Werkstücken auf einer Basis, mit einem der Basis zugeordneten, senkrecht zu der Basis orientierten, langgestreckten Träger (1) und einem Ausleger (2), der im Wesentlichen senkrecht zu der Längserstreckung des Trägers (1) ausgerichtet ist, der Ausleger (2) ist verschieblich in einem Klemmblock (3) gelagert, der verschieblich an dem Träger (1) gelagert ist, so dass der Ausleger (2) und der Träger (1) jeweils unabhängig voneinander, relativ zueinander verschiebbar gelagert sind, an einem Ende des Auslegers (2) ist ein Klemmhebel (5) angeordnet, dem eine Verlagerungseinrichtung (4) zugeordnet ist, so dass das dem Träger (1) abgewandte, distale Ende des Klemmhebels (5) relativ zu dem Ausleger (2) verlagerbar ist, **dadurch gekennzeichnet, dass** an dem distalen Ende des Klemmhebels (5) ein abnehmbarer Aufsatz (20) mit zumindest einer in Richtung auf die Basis orientierten Profilausnehmung (21, 22) angeordnet ist.

2. Vorrichtung nach Anspruch 1, **dadurch gekennzeichnet, dass** der Aufsatz (20) drehbar und arretierbar an dem Klemmhebel (5) befestigt ist.

3. Vorrichtung nach Anspruch 1 oder 2, **dadurch gekennzeichnet, dass** der Klemmhebel (5) schwenkbar an dem Ausleger (2) gelagert und an dem Klemmhebel (5) eine gabelförmige Aufnahme für den Ausleger (2) ausgebildet ist.

4. Vorrichtung nach einem der voranstehenden Ansprüche, **dadurch gekennzeichnet, dass** der Ausleger (2) und/oder der Träger (1) schienenartig ausgebildet sind und insbesondere einen rechteckigen Querschnitt oder einen Doppel-T-Querschnitt aufweisen.

5. Vorrichtung nach einem der voranstehenden Ansprüche, **dadurch gekennzeichnet, dass** der Klemmhebel (5) in Richtung auf die Basis federbelastet ist.

6. Vorrichtung nach einem der voranstehenden Ansprüche, **dadurch gekennzeichnet, dass** an dem Klemmhebel (5) eine Verstelleinrichtung (61) mit einer Aufnahme (6) für den Aufsatz (20) angeordnet ist.

7. Vorrichtung nach einem der voranstehenden Ansprüche, **dadurch gekennzeichnet, dass** der Klemmblock (3) in Richtung auf die Basis und/oder von der Basis weg federbelastet ist.

8. Vorrichtung nach einem der voranstehenden Ansprüche, **dadurch gekennzeichnet, dass** die Verlagerungseinrichtung (4) als Exzenter ausgebildet ist.

9. Vorrichtung nach Anspruch 8, **dadurch gekennzeichnet, dass** der Exzenter (4), ausgehend von einer Mittelstellung in unterschiedlichen Drehrichtungen unterschiedliche Exzentrizitäten aufweist.

10. Vorrichtung nach einem der voranstehenden Ansprüche, **dadurch gekennzeichnet, dass** an dem Exzenter (4) ein starrer Hebel (41) angeordnet ist.
